# EUROPEAN PATENT APPLICATION

(11) **EP 0 567 904 A1**
(43) Date of publication of application: **03.11.1993**
(21) Application number: 93106416.6
(22) Date of filing: 21.04.1993
(51) Int. Cl.: H02H 7/04, H02J 13/00

(54) **Parameter monitoring equipment for electrical power transformer center**

(30) Priority: 30.04.1992 ES 9200912
(71) Applicant: ALCATEL STANDARD ELECTRICA, S.A., E-28045 Madrid (ES)
(72) Inventor: Barbero de Dompablo, Santiago, E-28016 Madrid (ES); Cid Vila, Ismael, E-28027 Madrid (ES)
(74) Representative: Pohl, Herbert, Dipl.-Ing

(57) **Abstract**

It effects measurements of the established parameters of the electrical power transformer center in a continuous manner and informs of the status of the center.

It incorporates a converter module (1) to measure the parameters, and which is connected to a measurement adquisition module (2) and to the different elements in the transformer center (7).

The measurement adquisition module (2) converts the analogue levels of the measurements to logic levels; it is also connected to a storage module (3) and a control module (4) that processes the obtained parameter values.

The measurement adquisition module (2) has digital inputs (9) that indicate the state of the different devices in the transformer center (7).

The control module (4) is connected to a driver module (6) that is connected to the operating devices of the transformer center (7).

The storage module (3) and the control module (4) are connected to a communication module (5) which, in turn, is connected to the medium voltage power line (11) and can be connected to a portable equipment (12), to permit communication with external circuits.

## Description

### OBJECT OF THE INVENTION

The invention refers to an equipment for monitoring the parameters of an electrical power transformer center, which performs the measurement of the established parameters of the electrical power transformer center in a continuous manner and informs of the status of the center.

This invention, as stated in the title of this document, is applicable to electrical power transformer centers of electric utilities.

### BACKGROUND TO THE INVENTION

The electrical power transformer centers use transformers immersed in oil and governed by the standard IEC 354 (1972), which indicates the operating conditions for transformers immersed in oil under different environmental and load conditions, in order not to exceed the limit for insulation degradation due to thermal effects.

This standard assists the electrical utilities to select the rated power of transformers for their new installations and permits the transformer lifetime loss to be calculated for a defined environmental temperature, a determined load and a rated power for the transformer working in a steady and uninterrupted manner.

To monitor the correct operation of the electrical power transformer center, it is therefore necessary to measure its parameters. This measuring process is normally carried out periodically by an operator in the transformer center. Values corresponding to the interval between two measurements are estimated by interpolation.

With these periodic measurements, the parameters referred to are calculated; for example, mean load borne by the transformer, rate of loss of transformer life, etc.

The procedure currently in use for measuring the parameters has the following inconveniences:
- measurements have to be made locally, requiring the operator to travel to the electrical power transformer center;
- the allocation of values between the actual recorded measurements by means of interpolation from these measurements, does not permit consideration to be given to abrupt or intermittent changes that may have occurred in the parameters to be measured;
- the reliability is degraded in making the calculations of the parameters of the transformer center by using values obtained by interpolation.

Systems are also known for installation in electrical power transformer centers for remote measurement and control purposes; these arc monitored by radio or over a dedicated telephone line. They monitor alarm situations by reading measurements made in the transformer center. Alarm management is done by an operator on a basis of the data obtained. These data are not stored or used for following the evolution of the parameters of the corresponding transformer.

### TECHNICAL PROBLEM TO BE RESOLVED

Consequently the technical problem to be resolved, consists of performing the measurement of the parameters of the electrical power transformer centers in a continuous manner.

### CHARACTERISATION OF THE INVENTION

To overcome all the inconveniences mentioned above and to provide a solution to the technical problem stated, the invention includes a converter module which serves to measure the established parameters of the electrical power transformer center, which is connected to a measurement adquisition module and to different elements in the electrical power transformer center whose characteristics it is wished to measure.

Another characteristic of the invention is that the measurement adquisition module, which serves to convert the analogue levels of the measurements of the parameters of the transformer center to logic levels, at a frequency in accordance with the maximum rate of change of these parameters, is also connected to a storage module. This storage module, which temporarily stores the obtained parameter values, is, in turn, connected to a control module that processes the obtained parameter values in order to obtain another set of parameters, called the calculated parameters, which are also stored in the storage module.

In addition, the invention is characterised in that the measurement adquisition module also has an additional set of digital inputs that indicate the status of the different devices to be found in the transformer center.

Another characteristic of the invention is that the control module, with the set of obtained parameter values, with the values of the additional digital inputs, and with the set of calculated parameter values, and in accordance with a series of pre-established criteria, generates a set of alarms which, in the event, can trigger a sequence of operational commands for the different devices in the transformer center, that is sent to a driver module which has the Job of operating these devices.

It is also characterised in that it includes a communication module connected to the storage module, to the control module and to the medium voltage power line, and that also has an additional output for a portable equipment.

This communication module permits remote reading of the set of data stored in the storage module, as well as the transmission of commands from the remote point to the control module; or, reading can be done of the stored data and transmission of commands from the portable equipment.

In this way, by means of the stated characteristics of the invention, measurements of the parameters of the electrical power transformer center become available without it being necessary for a person to travel to the transformer center, through the use of the medium voltage power line to effect the communications.

The invention also permits the transformer to be replaced at the appropriate moment as a result of the data that are being continuously obtained.

On the other hand, it is possible to control and know the status of the switches of the transformer center remotely, making use of the medium voltage power lines.

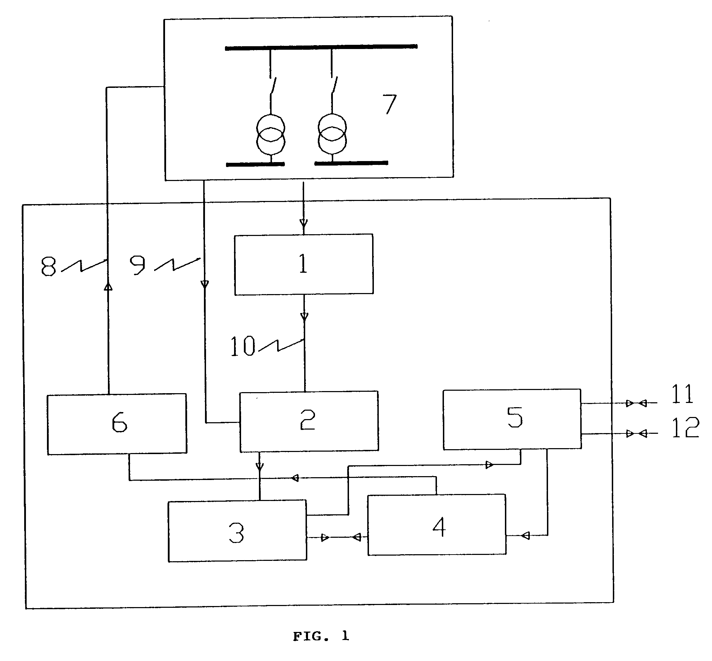

Next, in order to provide a better understanding of the description given in this document, and forming an integral part thereof, a single figure is attached in which, by way of illustration but in no way limiting, the object of the invention is shown.

### BRIEF FOOTNOTE TO THE FIGURE

The figure shows a functional block diagram of an implementation of the invention.

### DESCRIPTION OF THE INVENTION

As has already been mentioned, the object of the invention is to perform the measurements of the parameters of electrical power transformer centers in a continuous manner, and to provide information on the status of the center.

To achieve these objectives, the invention has a converter module 1 that is connected to a measurement adquisition module 2 and to the different elements of the transformer center 7 whose characteristics it is wished to measure.

The measurement adquisition module 2 is connected to a storage module 3 and to the different devices that are to be found in the transformer center 7 in order to know their status.

In addition, the invention has a control module 4 that is connected to the storage module 3, to a communication module 5 and to a driver module 6; and which controls the measurement of the parameters and the storage of the results obtained.

The driver module 6 is connected to the different devices in the transformer center 7, in such a way that it operates on these devices when considered necessary by and on the instruction of the control module 4.

The communication module 5, which can be connected to a portable terminal 12, is connected to the medium voltage power line 11, permitting it to read the data stored at a remote point over the medium voltage power line 11, and perform the reading of the stored data and transmit commands from the portable terminal 12.

The converter module 1 has the job of measuring and/or transforming the established parameters in the electrical power transformer center 7 (current, voltage, temperature, phase angle, etc.) to analogue voltage levels or current loops, to be sent subsequently to the measurement adquisition module 2.

The obtained parameters 10 from the converter module 1, consisting of the analogue signals mentioned, are transformed into digital signals by means of analogue-to-digital converters included in the measurement adquisition module 2.

The digital data obtained in the measurement adquisition module 2 are stored in the storage module 3.

The measurement adquisition module 2 has a set of additional digital inputs 9 that indicate the status of the different devices to be found in the transformer center 7. These data are also stored in the storage module 3.

From the data stored in the storage module 3, the control module 4, by means of programmed algorithms, calculates another distinct set of parameters, called calculated parameters, such as the rate of loss of transformer lifetime, real energy, reactive energy, real power, reactive power, mean voltage, etc., and these parameters are likewise stored in the storage module 3.

On the other hand, the control module 4, with the set of obtained parameter values 10, with the values of the additional digital inputs 9, and with the set of calculated parameter values, and in accordance with a number of programmed sequences, generates a set of alarms that are stored in the storage module 3 for subsequent transmission to the remote station, and which can also directly trigger a sequence of operating commands for the driver module 6.

The operator in the remote station, after analysing the received alarms, can initiate a series of operations 8 on the devices in the electric power transformer center 7 through the communication module 5, the control module 4 and the driver module 6.

The communication module 5 is connected to a central computer over the medium voltage power line 11, the equipment being interrogated from a remote point.

Similarly the communication module 5 can be connected to a portable terminal 12 in order to carry out the reading of the stored data and the transmission of commands from it.

## Claims

1. PARAMETER MONITORING EQUIPMENT FOR ELECTRICAL POWER TRANSFORMER CENTER, characterised:
- in that it incorporates a converter module (1) to measure the established parameters of the electrical power transformer center (7), which is connected to a measurement adquisition module (2) and to the different elements in the transformer center (7) whose characteristics it is wished to measure;
- in that the measurement adquisition module (2), which serves to convert the analogue levels of the measurements of the parameters of the transformer center (7) to logic levels at a frequency in accordance with the maximum rate of change of these parameters, is also connected to a storage module (3); and
- in that the storage module (3), which temporarily stores the obtained parameter values (10), is, in turn, connected to a control module (4) that processes the obtained parameter values in order to obtain another different set of parameters, termed the calculated parameters, which are also stored in the storage module (3).

2. PARAMETER MONITORING EQUIPMENT FOR ELECTRICAL POWER TRANSFORMER CENTER in accordance with claim 1, also characterised:
- in that the measurement adquisition module (2) also has an additional set of digital inputs (9) that indicate the status of the different devices to be found in the transformer center (7);
- in that these logic values are stored in the storage module (3); and
- in that the control module (4), with the set of obtained parameter values (10), with the values of the additional digital inputs (9), and with the set of the calculated parameter values, and in accordance with a series of pre-established criteria, generates a set of alarms which, in the event, can trigger a sequence of operating commands (8) for the different devices in the transformer center (7), that is sent to a driver module (6) which has the job of operating these devices.

3. PARAMETER MONITORING EQUIPMENT FOR ELECTRICAL POWER TRANSFORMER CENTER in accordance with claim 1, characterised: in that it also includes a communication module (5) connected to the storage module (3), to the control module (4) and to the medium voltage power line (11), and which has an additional output for a portable equipment (12), which permits:
- remote reading of the set of data stored in the storage module (3);
- the transmission of commands from the remote point to the control module (4); and
- reading of the stored data and the transmission of commands from the portable equipment (12).
